# EUROPEAN PATENT APPLICATION

(11) **EP 1 280 030 A1**
(43) Date of publication of application: **29.01.2003**
(21) Application number: 02016286.3
(22) Date of filing: 23.07.2002
(51) Int. Cl.: G05D 1/00, G01C 21/26

(54) **Method and system for converting positioning signals of different coordinate systems to prescribed coordinate systems**

(30) Priority: 25.07.2001 JP 2001223735
(71) Applicant: NEC CORPORATION, Tokyo (JP)
(72) Inventor: Ichimura, Shigehiro, Minato-ku, Tokyo (JP)
(74) Representative: VOSSIUS & PARTNER

(57) **Abstract**

In a local information server, a number of coordinate converters are respectively associated with positioning signals of different coordinate systems. Each converter performs a coordinate conversion on the associated positioning signal so that the latter is converted to a positioning signal of a prescribed coordinate system, so that when a positioning signal is received from a user terminal, it is supplied to one of the coordinate converters corresponding to its coordinate system. The converted positioning signal is used to retrieve local information from a database. The retrieved data is then transmitted to the user terminal.

## Description

The present invention relates generally to translation of each of a plurality of different coordinate systems to a prescribed coordinate system, and more specifically to a method and system for providing local information based on a received positioning signal regardless of its coordinate system. Such local information includes local weather forecast, local restaurants, local shopping and transportation facilities, time schedule of arrivals and departures of local railway stations.

A number of positioning systems are known and used to identify the position of a user terminal to retrieve local information from a database. The global positioning system is one of the well known systems. In the WGS84 system, the user's current position is represented in terms of longitude, latitude and elevation. Well known car navigation systems provide users with navigational information using the WSG84 system.

The known positioning systems include a number of local positioning systems. In one local positioning system, as described in

JP-B-308658/99 , a user-transmitted pilot signal is received by a number of mutually synchronized base stations. Each base station determines the amount of phase offset of the received pilot signal from a reference time base and performs calculation on the pilot signal using the phase offset value. The results of these calculations are collected by a positioning station where the collected data are processed to determine the location of the user terminal.

In a local positioning system, as disclosed in JP-B-40259/98, the identification number of a user terminal transmitted to a PHS (personal handyphone system) base station is directly used as an indication of the current position of the user terminal by virtue of the network's micro-cell structure. The ID signal is used to retrieve a corresponding local address from a database in which address data are mapped to different localities. Using the retrieved address data, a search is made through the database of a local information server.

However, since the known positioning systems use different coordinate systems, they can only handle the positioning signal of a particular coordinate system. Therefore, a need exists for a local information server that can handle positioning signals regardless of their systems.

It is therefore an object of the present invention to provide a method and system for converting the coordinate of a positioning signal to a prescribed coordinate and retrieving local information from a database according to the converted positioning signal.

According to a first aspect of the present invention, there is provided a coordinate conversion method comprising the steps of receiving a positioning signal of a coordinate system from a user terminal, identifying the coordinate system of the received signal, and performing a coordinate conversion on the received positioning signal according to the identified coordinate system so that the received signal is converted to a positioning signal of a prescribed coordinate system.

According to a second aspect, the present invention provides a method of providing a local information from a database. The method comprises the steps of receiving a positioning signal of a coordinate system from a user terminal, identifying the coordinate system of the received signal, performing a coordinate conversion on the received positioning signal according to the identified coordinate system so that the received signal is converted to a positioning signal of a prescribed coordinate system, and retrieving local information from the database in accordance with the converted positioning signal and transmitting the retrieved information to the user terminal.

According to a third aspect, the present invention provides a coordinate conversion system comprising a plurality of coordinate converters respectively associated with positioning signals of different coordinate systems, each converter performing a coordinate conversion on the associated positioning signal so that the latter is converted to a positioning signal of a prescribed coordinate system, and converter selection circuitry for receiving a positioning signal from a user terminal, and supplying the received signal to one of the coordinate converters corresponding to the coordinate system of the received signal.

According to a fourth aspect, the present invention provides a local information server comprising a database, data retrieval circuitry for retrieving local information from the database in accordance with an input signal applied thereto and transmitting the retrieved information to a user terminal and a plurality of coordinate converters respectively associated with positioning signals of different coordinate systems. Each converter performs a coordinate conversion on the associated positioning signal so that the latter is converted to a positioning signal of a prescribed coordinate system, and converter selection circuitry for receiving a positioning signal from the user terminal, and supplying the received signal to one of the coordinate converters corresponding to the coordinate system of the received signal and applying the converted positioning signal to the data retrieval circuitry as the input signal.

The present invention will be described in detail further with reference to the following drawings, in which:
Fig. 1 is a block diagram of a mobile communication system in which local information service is provided in response to a positioning signal regardless of its data format;
Figs. 2A and 2B are illustrations of positioning signals of different data formats;

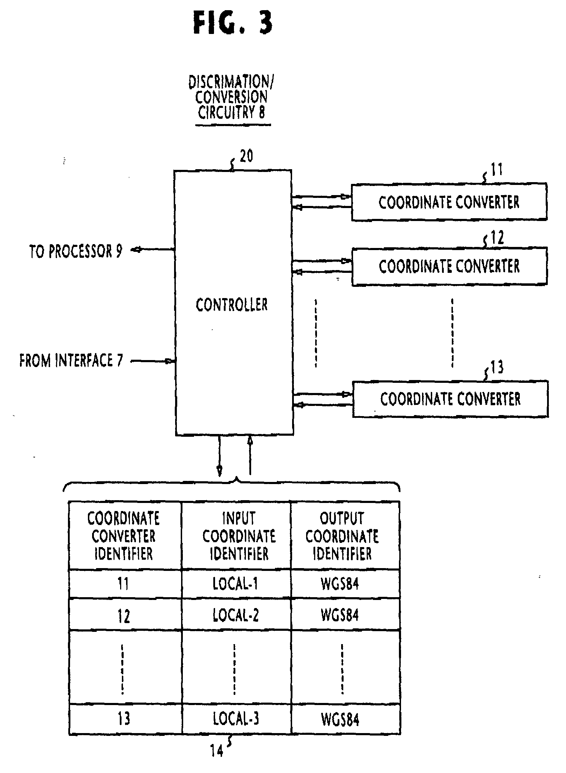

Fig. 3 is a block diagram of discrimination/conversion circuitry of the present invention;
Fig. 4 is a flowchart of the operation of a controller according to the present invention;
Fig. 5 is an illustration of a coordinate conversion process; and
Fig. 6 is a flowchart of the operation of a processor.

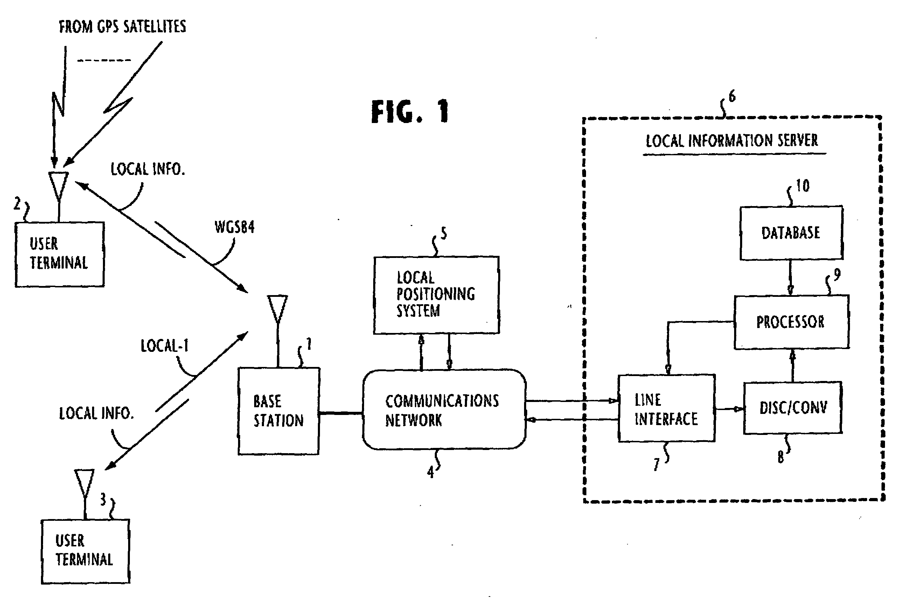

In Fig. 1, a mobile communication system of the present invention is illustrated. The communication system includes a wireless base station 1, which forms part of a communications network 4 such as the Internet. As a typical example, two mobile user terminals 2 and 3 are illustrated to establish wireless access links to the base station 1. User terminal 2 is of the type capable of receiving and processing global positioning signals from the GPS (global positioning system) satellites and the user terminal 3 is of the type that receives local positioning signals from a local positioning system 5 via the network 4 and base station 1.

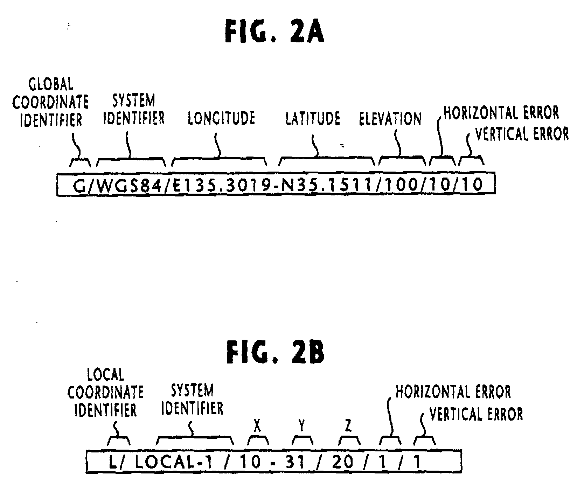

The global positioning signal transmitted from the user terminal 2 is in the data format of the global positioning system as shown in Fig. 2A. This signal begins with the global coordinate identifier G, which is followed by a system identifier such as WGS84, Longitudinal and latitudinal information of the user terminal successively follow the system identifier WGS84. For example, E35.3019 and N35.1511 indicate that the mobile user terminal 2 is located at 35 degrees 30 minutes 19 seconds of east longitude and 35 degrees 15 minutes 11 seconds of north latitude. Information of elevation, and horizontal and vertical errors of the user position are also indicated in the unit of meters.

The local positioning signal transmitted from the user terminal 3 is in the data format of a local positioning system as shown in Fig. 2B. This signal begins with a local coordinate identifier L which is followed by a system identifier such as LOCAL-1. The X, Y and Z coordinates of the user terminal are successively indicated following the system identifier. For example, the data "10-31/20" indicates that the user terminal 3 is located at 10 meters on the X coordinate, 31 meters on the Y coordinate, and 20 meters on the Z coordinate of the local coordinate system. Information of horizontal and vertical errors of the user position are also indicated in the unit of meters.

A local information server 6 is connected to the communications network 4. This server is comprised of a line transceiver or interface 7, a discrimination/conversion circuitry 8, a processor 9 and a database 10 in which various local information (local weather forecast, local restaurants, local shopping and transportation facilities, time schedule of arrivals and departures of local railway stations, etc.) are maintained.

Discrimination/conversion circuitry 8 includes a controller 20, a plurality of coordinate converters 11,12 and 13, and a table memory 14. Controller 20 is connected to the line interface 7 to receive positioning signals transmitted from the user terminals. Each of the coordinate converters 11,12 and 13 is connected to the controller 20 to perform data format translation from a local positioning signal received from the controller 20 to the global positioning signal. Coordinate converters 11 to 13 are provided in number corresponding to the number of different data formats in which local positioning signals are transmitted. Coordinate converters 11, 12, 13 are uniquely identified by a coordinate converter identifier.

Controller 20 is further connected to the table memory 14, in which the coordinate converter identifiers of converters 11, 12, 13 are mapped to their local coordinate system identifiers as an input coordinate identifier. The global coordinate system identifier WGS84 is indicated in each entry of the table memory 14 as an output coordinate identifier.

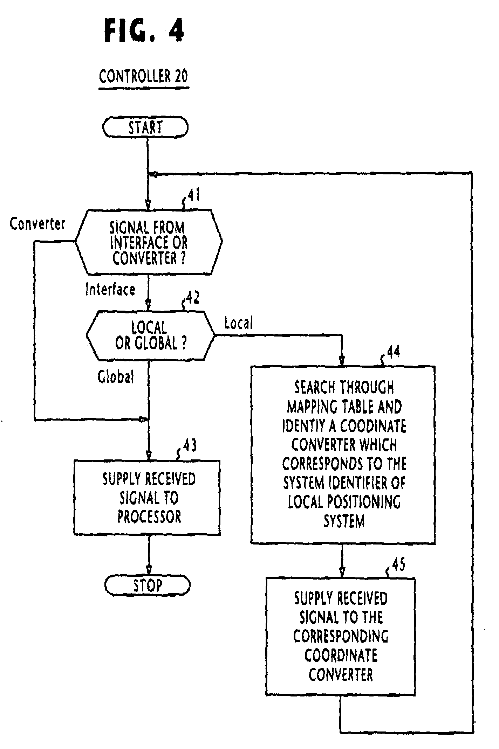

The operation of the controller 20 proceeds according to a flowchart shown in Fig. 4. Controller 20 is monitoring the line interface 7 and the coordinate converters 11, 12, 13 to detect a positioning signal from the line interface 7 or a converted positioning signal from one of the coordinate converters 11, 12, 13 (step 41). If a positioning signal is received from the line interface, the controller proceeds from step 41 to step 42 to determine whether the identifier of the coordinate system is the coordinate identifier G of the global positioning system or the coordinate identifier of a local positioning system. If the global coordinate identifier G is contained in the received signal, flow proceeds to step 43 to supply this signal to processor 9.

If the controller 20 has determined that the received signal contains the coordinate identifier of a local positioning system, it proceeds to step 44 to search through the mapping table 14 and identifies one of the coordinate converters that corresponds to the system identifier of the received signal.

If the received signal contains the system identifier of a local positioning system, the controller proceeds to step 45 to supply the received signal to one of the coordinate converters that corresponds to this system identifier. Controller 20 then returns from step 45 to step 41 to monitor the output of this coordinate converter.

Therefore, if the system identifier of the local positioning system contained in the received signal is LOCAL-1, for example, the controller supplies the received signal to the coordinate converter 11. Controller 20 returns from step 45 to step 41 to monitor the output of the coordinate converter 11.

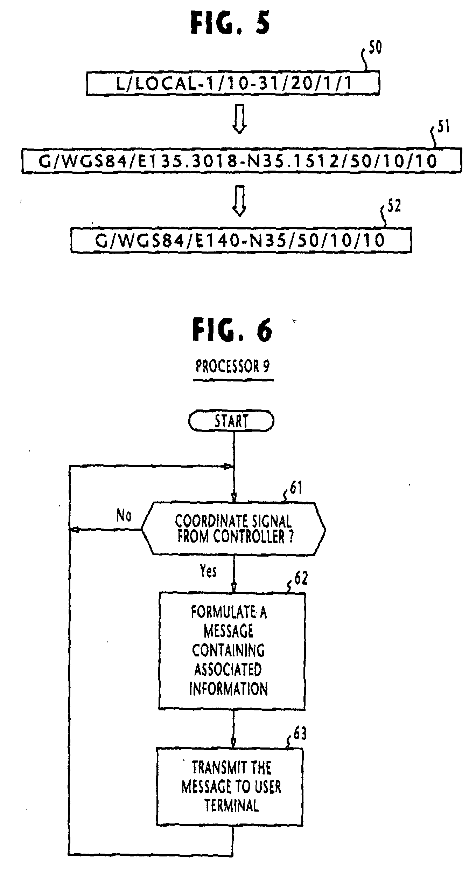

If the controller 20 has received a local positioning signal 50, the local coordinate system of this signal will be converted to a global positioning signal 51 of the global coordinate system as shown in Fig. 5. When the controller 20 receives the global positioning signal 61 from the coordinate converter 11, flow proceeds from step 41 to step 43 to hand over this signal to the processor 9. Preferably, the converted data is rounded off to the same number of decimal places as the local positioning signal. In the illustrated example, the converted global positioning signal will be represented by "G/WGS84/E140-N35/50/10/10" as indicated by numeral 52.

Processor 9 is constantly monitoring the output of the controller 20 for detecting the presence of its output signal to proceed to operate according to the flowchart of Fig. 6.

When the processor 9 detects that the controller 20 produced a positioning signal regardless of whether it has been converted or not (step 61), it retrieves local information from the database 10 based on the signal from the controller 20 and formulates a message with the retrieved information (step 62) and transmits it to the requesting user terminal (step 63).

## Claims

1. A coordinate conversion method comprising the steps of:
a) receiving a positioning signal of a coordinate system from a user terminal;
b) identifying said coordinate system of the received signal; and
c) performing a coordinate conversion on the received positioning signal according to the identified coordinate system so that the received positioning signal is converted to a positioning signal of a prescribed coordinate system.

2. A method of providing a local information from a database, comprising:
a) receiving a positioning signal of a coordinate system from a user terminal;
b) identifying said coordinate system of the received signal;
c) performing a coordinate conversion on the received positioning signal according to the identified coordinate system so that the received positioning signal is converted to a positioning signal of a prescribed coordinate system; and
d) retrieving local information from said database in accordance with the converted positioning signal and transmitting the retrieved information to said user terminal.

3. The method of claim 1 or 2, wherein the prescribed coordinate system is a coordinate system of a global positioning system and at least one of said identified coordinate system is a coordinate system of a local positioning system.

4. The method of claim 1, 2 or 3, wherein step (c) performs coordinate conversion of error information contained in the received positioning signal to error information of said prescribed coordinate system.

5. The method of claim 4, wherein step (c) performs said coordinate conversion so that the error information of the converted positioning signal contains decimal places equal in number to decimal places of the error information contained in the received positioning signal.

6. The method of claim 2, 3, 4 or 5, wherein step (d) retrieves information from said database in accordance with the received signal if the received signal is the positioning signal of said prescribed coordinate system, and wherein step (c) performs said conversion if the received signal is of a coordinate system other than said prescribed coordinate system.

7. A coordinate conversion system comprising:
a plurality of coordinate converters respectively associated with positioning signals of different coordinate systems, each converter performing a coordinate conversion on the associated positioning signal so that the associated positioning signal is converted to a positioning signal of a prescribed coordinate system; and
converter selection circuitry for receiving a positioning signal from a user terminal, and supplying the received signal to one of said coordinate converters corresponding to the coordinate system of the received signal.

8. The coordinate conversion system of claim 7, wherein said prescribed coordinate system is a coordinate system of a global positioning system and at least one of said different coordinate systems is a coordinate system of a local positioning system.

9. The system of claim 7 or 8, wherein said converter selection circuitry comprises:
a table memory for mapping identifiers of said different coordinate systems to said plurality of coordinate converters; and
control circuitry for detecting an identifier from said received signal and selecting one of said coordinate converters which corresponds to the detected identifier and supplying the received signal to the selected coordinate converter.

10. The system of claim 7, 8 or 9, wherein each of said coordinate converters performs conversion of error information contained in the received positioning signal to error information of said prescribed coordinate system.

11. The system of claim 10, wherein each of said coordinate converters performs said conversion so that the error information of the converted positioning signal contains decimal places equal in number to decimal places of the error information contained in the received positioning signal.

12. A local information server comprising:
a database;
data retrieval circuitry for retrieving local information from said database in accordance with an input signal applied thereto and transmitting the retrieved information to a user terminal;
a plurality of coordinate converters respectively associated with positioning signals of different coordinate systems, each converter performing a coordinate conversion on the associated positioning signal so that the associated positioning signal is converted to a positioning signal of a prescribed coordinate system; and
converter selection circuitry for receiving a positioning signal from said user terminal, and supplying the received signal to one of said coordinate converters corresponding to the coordinate system of the received signal and applying the converted positioning signal to said data retrieval circuitry as said input signal.

13. The server of claim 12, wherein said converter selection circuitry supplies the received signal to said one coordinate converter if the received signal is other than the positioning signal of said prescribed coordinate system and supplies the received signal to said data retrieval circuitry as said input signal if the received signal is of the same coordinate system as said prescribed coordinate system.

14. The server of claim 12 or 13, wherein said prescribed coordinate system is a coordinate system of a global positioning system and at least one of said different coordinate systems is a coordinate system of a local positioning system.

15. The server of claim 12, 13 or 14, wherein said converter selection circuitry comprises:
a table memory for mapping identifiers of said different coordinate systems to said plurality of coordinate converters; and
control circuitry for detecting an identifier from said received signal and selecting one of said coordinate converters which corresponds to the detected identifier and supplying the received signal to the selected coordinate converter.

16. The server of claim 12, 13, 14 or 15, wherein each of said coordinate converters performs conversion of error information contained in the received positioning signal to error information of said prescribed coordinate system.

17. The local information server of claim 16, wherein each of said coordinate converters performs said conversion so that the error information of the converted positioning signal contains decimal places equal in number to decimal places of the error information contained in the received positioning signal.

18. A computer readable storage medium comprising steps of computer executable steps of:
a) receiving a positioning signal of a coordinate system from a user terminal;
b) identifying said coordinate system of the received signal;
c) performing a coordinate conversion on the received positioning signal to a positioning signal of a prescribed coordinate system according to the identified coordinate system; and
d) retrieving information from a database in accordance with the converted positioning signal and transmitting the retrieved information to said user terminal.

19. The computer readable storage medium of claim 18, wherein the prescribed coordinate system is a coordinate system of a global positioning system and at least one of said identified coordinate system is a coordinate system of a local positioning system.

20. The storage medium of claim 18 or 19, wherein step (c) performs coordinate conversion of error information contained in the received positioning signal to error information of said prescribed coordinate system.

21. The storage medium of claim 20, wherein step (c) performs said coordinate conversion so that the error information of the converted positioning signal contains decimal places equal in number to decimal places of the error information contained in the received positioning signal.

22. The storage medium of claim 18, 19, 20 or 21, wherein step (d) retrieves information from said database in accordance with the received signal if the received signal is the positioning signal of said prescribed coordinate system, and wherein step (c) performs said conversion if the received signal is of a coordinate system other than said prescribed coordinate system.
